# EUROPEAN PATENT APPLICATION

(11) **EP 2 573 678 A1**
(43) Date of publication of application: **27.03.2013**
(21) Application number: 12192362.7
(22) Date of filing: 13.05.2011
(51) Int. Cl.: G06F 9/50

(54) **A decision support system for moving computing workloads to public clouds**

(30) Priority: 14.05.2010 US 334884 P; 03.12.2010 US 960104
(62) Divisional of application: 11781354.3
(71) Applicant: Unisys Corporation, Blue Bell, PA 19422 (US)
(72) Inventor: Mithani, Mohammad Firoj, 560043 Bangalor - Karnataka (IN); Salsburg, Michael A., Phoenixville, PA Pennsylvania 19460 (US)
(74) Representative: Harrison Goddard Foote

(57) **Abstract**

An automated approach to analyzing computer workloads and cloud computing environments to support moving and hosting the workloads within the cloud computing environments. A workload may be identified and analyzed based upon business and technical attributes to determine whether the workload is suitable for moving to a cloud computing environment. Similarly, public clouds may be identified and analyzed based upon their business and technical attributes to determine whether the public clouds are suitable for hosting a workload. The analysis of the public clouds may be based on a particular workload, a category of workloads, or irrespective of workloads or workload categories. A best-fit public cloud may be identified for a workload determined to be suitable for moving to a public cloud environment based upon the analyses.

## Description

### CROSS REFERENCE TO RELATED APPLICATIONS

This non-provisional patent application is related to and claims priority under 35 U.S.C. § 119 to Provisional United States Patent Application Serial No. 61,334,884, entitled "A Decision Support System for Moving Workloads to Public Clouds," filed May 14, 2010; to Provisional United States Patent Application Serial No. 61,334,884, entitled "A Decision Support System for Moving Workloads to Public Clouds," filed May 14, 2010; U.S. Patent Application Serial No. 12/893,415, entitled "Leveraging Smart-Meters for Initiating Application Migration Across Clouds for Performance and Power-Expenditure Trade-Offs", filed September 29, 2010; U.S. Patent Application Serial No. 12/959,091, filed December 2, 2010; U.S. Patent Application Serial No. 12/959,086, filed December 2, 2010; U.S. Patent Application Serial No. 12/959,081, filed December 2, 2010; U.S. Patent Application Serial No. 12/959,091, filed December 2, 2010; U.S. Patent Application Serial No. 12/644,095, filed November 24, 2010; U.S. Patent Application Serial No. 12/525,848, filed August 9, 2009; the entire contents of which are hereby incorporated herein by reference in their entirety.

### TECHNICAL FIELD

The instant disclosure relates generally to cloud computing, and more particularly to systems and methods for analyzing business services (workloads) hosted in private data centers and cloud computing environments to identify suitable workloads to move to a cloud computing environment.

### BACKGROUND

The term "cloud computing" generally refers to a model that makes computing resources available over a network as services. Computing services provided in a cloud computing environment can be broadly divided into three categories, Infrastructure-as-a-Service ("IaaS"), Platform-as-a-Service ("PaaS"), and Software-as-a-Service ("SaaS"). IaaS is generally seen as comprising the delivery of computer hardware (e.g., servers, data storage systems, routers, etc.) as a service; PaaS generally seen as comprising the delivery of a computing platform or solution stack as a service; and SaaS generally seen as comprising hosting complete applications and delivering the applications as a service.

A "cloud" is a set of computing resources, such as computer hardware, data storage, networks, applications, services, and interfaces, that allow computing to be delivered as a service. A cloud can be a private cloud, a public cloud, or a hybrid cloud that combines both public and private clouds. A private cloud typically includes a data center or proprietary network that provides computing services to a group of people, an organization, a business, or another entity. A private cloud may be located within an organization's private network or within a private space dedicated to an organization within a cloud vendor data center. A public cloud is a cloud in which computing services are made available to the public, typically for a fee. For example, a cloud service provider may make computing resources available to an organization via the Internet. A public cloud may be configured as a web service that allows users to manage computing resources hosted by the public cloud via a web interface.

In a public cloud environment, computing resources are provided to a user on demand and in various sizes and configurations. For example, a user may utilize a public cloud for storing a small amount of data or for hosting processor intensive software applications. A user can also request additional resources on demand and de-allocate resources when they are no longer required. This flexibility and elasticity has made cloud computing attractive to many businesses and IT professionals. In addition to this flexibility and elasticity, cloud computing can enable an organization to reduce capital expenses normally allocated to IT infrastructure.

However, there are many factors to consider before an organization moves a computing workload to a public cloud. For example, there is a need to validate business applications (workloads) in terms of technical portability and business requirements/compliance so that the workloads can be deployed into a cloud without considerable customization. Conventionally, this validation is accomplished using a manual, time consuming process for workload identification, workload classification, and cloud provider assessment to find the 'best-fit' for business workload hosting. For the purpose of this specification, the term "workload" refers to any computing service or resource, such as, without limitation, a software application, data storage, computing infrastructure, a computing platform, or a solution stack.

Before any organization moves a workload to a cloud, the movement typically has to be justified in terms of benefits to the organization and technology support from the cloud provider. Business workloads typically have some business logic to execute, which is made up of software hosted on a base operating system and hosting hardware. If an organization is keen on moving the workload to a cloud (public or private), the organization should determine whether the existing workload can be deployed in the target cloud environment without considerable modifications to the way the business works. Similarly, the organization has to ensure that the public or private cloud environment meets all necessary hardware and software pre-requisites to host the workload. Considering the dynamics of the public cloud environment, the organization will frequently engage outside experts to help it understand and analyze the cloud providers' offerings, price models, and industry compliance. Even though there are a limited number of IaaS providers available, each provider typically has many business and implementation partners to facilitate the workload analysis through cloud advisory services. The public cloud offerings can be very complex, which makes it difficult to create a strategy of choosing 'best-fit' for business workloads in terms of technologies and terminologies.

Cloud analysis currently is a specialized domain of expertise. Typically, only the public cloud providers' business and strategic partners ("advisors") can assist the interested organizations to find the "best-fit" public cloud for a given workload. The implementation advisors generally require a significant amount of time to understand the business logic and technology dependencies of the business workloads. Hence, the organizations need to invest a lot of time in educating the implementation advisors to understand the business process. This activity requires a lot of time and effort to enable the leaders of the organization to make fact based decisions on finding the best-fit cloud environment for any workload. Thus, what is desired is a system that helps overcome one or more of the above-described limitations.

### SUMMARY

The systems and methods described herein attempt to overcome the deficiencies of the conventional systems by evaluating computing workloads and cloud providers to support workload hosting to a cloud computing environment.

According to one embodiment, a computer-implemented method for identifying a cloud computing environment for hosting a computing workload can include a processor analyzing at least one attribute of the computing workload to determine whether the computing workload is suitable for being hosted in a cloud computing environment. A processor can analyze one or more cloud computing environments to determine a level of suitability for each of the one or more cloud computing environments to host the computing workload. In response to determining that the computing workload is suitable for being hosted in a cloud computing environment, at least one of the one or more cloud computing environments for hosting the computing workload can be identified based on the level of suitability for each of the one or more cloud computing environments. The identified at least one cloud computing environment can be presented on a user interface.

According to another embodiment, a computer-implemented method for identifying at least one computing workload for hosting in a cloud computing environment can include a processor analyzing each computing workload to determine a level of suitability for each computing workload to be hosted in a cloud computing environment. A score can be assigned to each computing workload based on the level of suitability for the respective computing workload. A processor can analyze one or more cloud computing environments to determine a level of suitability for each of the one or more cloud computing environments to host a computing workload. A score can be assigned to each of the one or more cloud computing environments based on the level of suitability for the respective cloud computing environment. At least one computing workload can be identified for hosting by at least one of the one or more cloud computing environments. The identified computing workload can be presented via a user interface. The identified computing workload can also be transferred to a cloud computing environment.

According to yet another embodiment, a computer-implemented method for identifying at least one computing workload for hosting by a cloud computing environment can include a computing device analyzing at least one first attribute of each computing workload to determine whether the computing workload is suitable for being hosted in a cloud computing environment. In response to a determination that at least one of the computing workloads is suitable for being hosted in a cloud computing environment, a computing device can analyze at least one second attribute of each of the at least one computing workloads to determine a cloud computing score for each of the at least one computing workloads. The cloud computing score can be indicative of the suitability of the respective computing workload to be hosted in a cloud computing environment. A computing device can analyze one or more public clouds to determine a cloud provider score for each of the one or more public clouds. The cloud provider score can be indicative of the suitability of the respective public cloud for hosting a computing workload. One of the at least one computing workloads can be assigned to one of the public clouds based one the cloud computing score for the one computing workload and the cloud provider score for the one public cloud.

According to another embodiment, a computer program product for identifying at least one of a plurality of computing workloads for hosting in a cloud computing environment comprises a tangible computer-readable medium comprising computer-readable program code for analyzing at least one first attribute of each computing workload to determine whether the computing workload is suitable for being hosted in a cloud computing; computer-readable program code for, in response to a determination that at least one of the computing workloads is suitable for being hosted in a cloud computing environment, analyzing at least one second attribute of each of the at least one computing workloads to determine a cloud computing score for each of the at least one computing workloads, the cloud computing score being indicative of the suitability of the respective computing workload to be hosted in a cloud computing environment; computer-readable program code for analyzing one or more public clouds to determine a cloud provider score for each of the one or more public clouds, the cloud provider score being indicative of the suitability of the respective public cloud for hosting a computing workload; and computer-readable program code for assigning one of the at least one computing workloads to one of the public clouds based one the cloud computing score for the one computing workload and the cloud provider score for the one public cloud.

These and other aspects, features, and embodiments of the disclosed system and methods will become apparent to a person of ordinary skill in the art upon consideration of the following detailed description of illustrated embodiments exemplifying the best mode for carrying out the systems and methods as presently perceived.

### BRIEF DESCRIPTION OF THE DRAWINGS

Embodiments of the disclosed system and methods are illustrated by way of example and not limited by the following figures:

Figure 1 shows an operating environment, in accordance with certain exemplary embodiments.

Figure 2 shows a flow diagram of a method for moving one or more computing workloads to a public cloud environment, in accordance with certain exemplary embodiments.

Figure 3 shows a flow diagram of a method for identifying and analyzing computing workloads, in accordance with certain exemplary embodiments.

Figure 4 shows a flow diagram of a method for identifying and analyzing public clouds in accordance with certain exemplary embodiments.

Figure 5 shows a flow diagram of a method for moving a computing workload to a public cloud, in accordance with certain exemplary embodiments.

The drawings illustrate only exemplary embodiments and are therefore not to be considered limiting of the scope of the appended claims, as the invention may admit to other equally effective embodiments. The elements and features shown in the drawings are not necessarily to scale, emphasis instead being placed upon clearly illustrating the principles of the disclosed exemplary embodiments. Additionally, certain dimensions may be exaggerated to help visually convey such principles. In the drawings, reference numerals designate like or corresponding, but not necessarily identical, elements.

### DETAILED DESCRIPTION

Systems and methods described herein provide an automated approach to analyzing computing workloads and cloud providers to support movement of the workloads to a cloud computing environment. This automated approach enables a user or an organization, such as a corporation, to reduce costs and time associated with determining whether to move workloads to a cloud computing environment, such as a public cloud environment. This automated approach can accelerate the entire process of leveraging cloud computing benefits through an effective, informed, fact-based decision process.

Computing workloads may be identified and analyzed to determine whether the workloads are suitable for moving to a cloud computing environment. Analyzing a workload may include classifying the workload into a category, such as enterprise-class or commodity-class, based on attributes (e.g., business attributes) of the workload. Analyzing a workload may also include identifying and analyzing technology attributes (e.g., data size, whether a physical to virtual conversion is necessary, required operating system, etc.) of the workload. Each workload may be assigned a score or a ranking based on these analyses that identifies how suitable the workload is for being moved to a cloud computing environment.

Similarly, one or more public clouds (provided by one or more cloud providers) may be identified and analyzed based on the public cloud's attributes, features, and constraints. Analyzing a public cloud may include classifying the public cloud into a category (e.g., financial cloud, educational cloud, etc.) based on the public cloud's attributes, such as industry compliances and certifications. Analyzing a public cloud may also include analyzing technology attributes of the public cloud, such as supported operating systems and whether the public cloud service provider provides dedicated physical servers for (non-virtualized) workload hosting. The public cloud analyses may include a general overall analysis of the public cloud's attributes or may be directed to a particular workload or category of workloads (e.g., financial, healthcare, etc.). Each public cloud may be assigned a score or ranking based on these analyses that identifies how suitable the public cloud is for hosting workloads, a particular workload, or a category of workloads.

The rankings for the workloads and the rankings for the public clouds can be used to find a best-fit cloud for each workload that is determined to be suitable for moving to or hosting in a public cloud environment. The appropriate workloads can then be moved to their respective 'best-fit' public clouds.

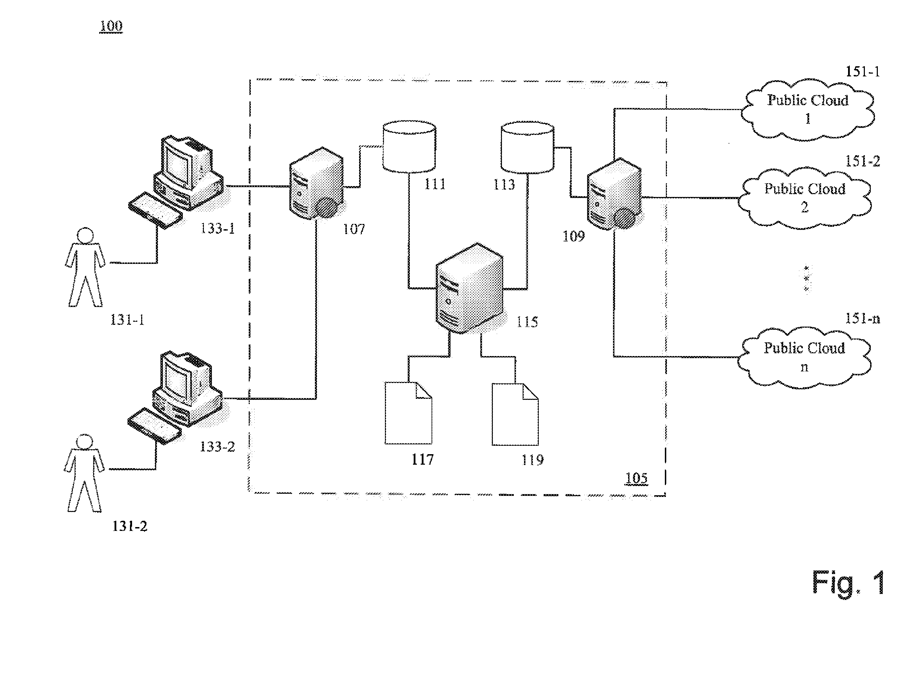

Turning now to the drawings, in which like numerals represent like (but not necessarily identical) elements throughout the figures, exemplary embodiments of the disclosed system and methods are described in detail. Figure 1 shows an operating environment 100, in accordance with certain exemplary embodiments. Referring to Figure 1, the operating environment 100 includes a cloud decision support system (CDSS) 105 and a number 'n' of public clouds 151. Although the clouds 151 are illustrated and described herein as public clouds, one of ordinary skill in the art having the benefit of the present disclosure would appreciate that aspects of the invention can be applied to private clouds as well as public clouds without departing from the scope and spirit of the present invention.

The public clouds 151 can include public clouds offered by a single cloud provider or by multiple cloud providers. For example, a first cloud provider may provide computing resources via public cloud 151-1, while a second cloud provider may provide computing resources via public cloud 151-2. Each of the clouds 151 can include different capabilities, features, attributes, and industry certifications. For example, public cloud 151-1 may offer Infrastructure-as-a-Service (IaaS) only, while public cloud 151-2 offers Platform-as-a-Service (PaaS) as well as IaaS. A third cloud 151-3 (not shown) may offer Software-as-a-Service (SaaS) along with IaaS and PaaS. In another example, public cloud 151-1 may offer virtual servers only, while public cloud 151-2 offers physical servers and virtual servers.

The exemplary CDSS 105 includes a web server 109 logically coupled to the clouds 151 via a network (not shown). For example, in the illustrated public cloud embodiment, the web server 109 may be coupled to the clouds 151 via the Internet. In a private cloud embodiment, the web server 109 may be coupled to private clouds via a local area network (LAN) or a private wide area network (WAN), or other network.

The web server 109 obtains information regarding the clouds 151 and creates a cloud profile for each cloud 151. Each cloud profile can include a unique identifier, such as a Public Cloud Identifier (PCID), and the cloud information for the respective public cloud 151. In certain exemplary embodiments, the cloud profiles may be created manually or via an automated process. For example, a manual process may include the web server 109 providing a user interface at a client device (e.g., personal computer, console, notebook computer, etc.) for a user to enter cloud profile information. The web server 109 may provide such a user interface to create the cloud profiles and then populate the cloud profiles with the features and attributes of the public clouds 151. This user interface may be implemented as a web-based user interface that can be accessed via the Internet. An automated process may include a computer program or a script that obtains cloud profile information, for example from a cloud provider. The web server 109 can store the cloud profiles for the public clouds 151 in a data storage unit, such as a cloud database 113.

The cloud profiles aid in capturing the features and offerings of particular public clouds 151. The information stored in a cloud profile can include any information regarding a public cloud 151, including business attributes, such as compliance and certifications achieved by the provider of the public cloud 151. The cloud profile information can also include technology attributes and features of the public cloud 151. Exemplary technology attributes of a public cloud 151 may include, but are not limited to, whether the public cloud 151 provides only virtual or physical machines or virtual resources to host computing workloads, supported operating systems (OS), supported Database Management Systems (DBMS), and application development environments provided by the public cloud 151. Exemplary technology features for a public cloud 151 may also include underlying server, storage, network, and load balancer hardware; dynamic scale-in, scale-out, scale-up, and scale-down capabilities; and data protection in motion (DIM) and data protection at rest (DAR) for multi-tenant shared environments. Additional cloud capabilities that may be identified in a cloud profile include, but are not limited to, resource demand forecasting for business applications, dynamic business service discovery, end to end business service transaction monitoring, alerting, event logging, auto-incident generation, and self service console, to name a few. One of ordinary skill in the art having the benefit of the present invention would appreciate that many other technology attributes other that those mentioned above may be included in a cloud profile without departing from the scope and spirit of the present invention.

The exemplary CDSS 105 also includes a second web server 107 logically coupled to one or more client computers 133. The web server 107 may be coupled to the client computers 133 via a network, such as a LAN, WAN, the Internet, or other type of network. The client computers 133 enable users, such as a business analyst 131-1 and an IT infrastructure specialist 131-2, to provide information regarding workloads to the web server 107. For example, the business analyst 131-1 may use client computer 133-1 to provide information regarding business aspects or attributes of one or more workloads to the web server 107. In another example, the IT infrastructure specialist 131-2 may use client computer 131-2 to provide information regarding technology attributes of one or more workloads to the web server 107. One of ordinary skill in the art having the benefit of the present disclosure would appreciate that the actors, business analyst 131-1 and IT infrastructure specialist 131-2, are exemplary and that other users having any number of titles and capabilities may be capable of providing information regarding workloads to the web server 107 via the client computers 133.

The web server 107 can create workload profiles based on the information received from the users 131. The workload profiles can include any information regarding a workload, including business attributes and technology attributes. Exemplary business attributes for a workload include, but are not limited to, type of industry, compliance (e.g., industry compliance) required, percent service availability or uptime required, and whether the workload is based on third party software. Exemplary technology attributes for a computing workload include, but are not limited to, size of workload (e.g., in gigabytes (GB)), amount of storage space required, and OS. Additional workload attributes that can be included in the workload profiles are discussed below.

In certain exemplary embodiments, the web server 107 provides a user interface to the user 131 via the client computer 133 to obtain workload information. For example, the web server 107 may provide a user interface to create the workload profiles and then populate the workload profiles with specific features and attributes of the workloads for specific industry. This user interface may be implemented as a web-based user interface that can be accessed via the Internet. In certain exemplary embodiments, the web server 107 includes an application or scripts that populates at least a portion of the workload profile using an automated process. For example, the size of the workload and amount of storage space required for a workload may, in some implementations, be identified by a software application. The web server 109 can store the workload profiles in a data storage unit, such as a workload database 111.

Although the web servers 107 and 109 are illustrated as separate web servers in Figure 1, in certain exemplary embodiments, the functionality of the web servers 107 and 109 can be accomplished with a single web server or by any number of web servers. In addition, other computing devices, such as an application server or general purpose server may be used in place of one or both web servers 107 and 109.

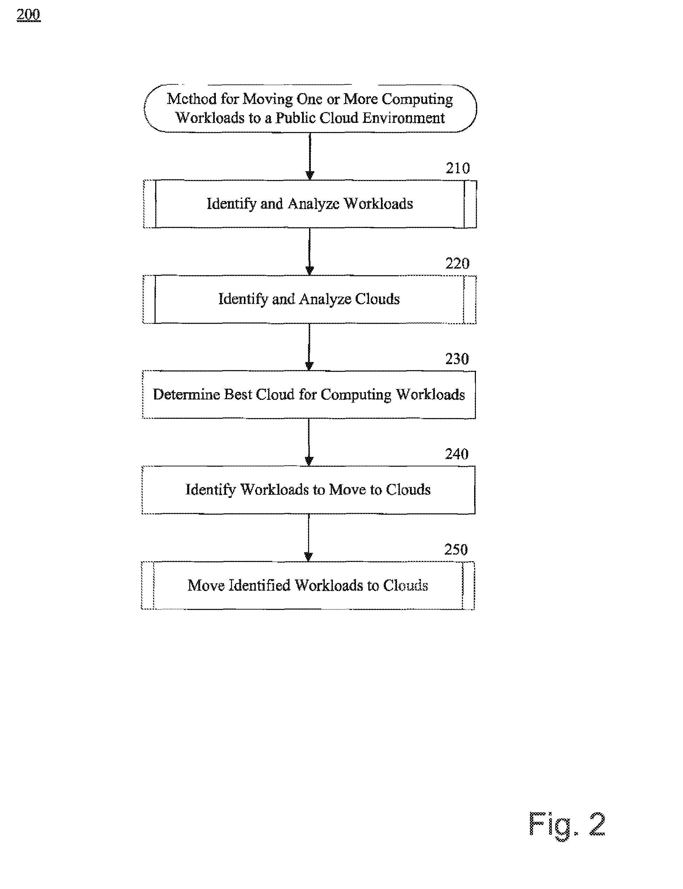

The exemplary CDSS 105 also includes an analytics server 115 (or other type of computing device) logically coupled to the workload database 111 and to the cloud database 113. The analytics server 115 can include one or more applications 117 that analyze the workload profiles and the cloud profiles to identify workloads that are suitable to move to a cloud computing environment and to find the 'best-fit' public cloud 151 from the available clouds for the identified workloads. The analytics server 115 can output a report 119 (via a client computer 133, printer, or other device) detailing the results of the analysis. In certain exemplary embodiments, the report 119 identifies the workloads that are best suited for moving to a public cloud 151. In certain exemplary embodiments, the report 119 for a particular computing workload includes a score or ranking for each public cloud 151, the score or ranking being indicative of that cloud's fit for that workload. The analytics server 115 and associated components of the CDSS 105 are described hereinafter with reference to the exemplary methods illustrated in Figures 2-5.

The exemplary embodiments can include one or more computer programs that embody the functions described herein and illustrated in the appended flow charts. However, it should be apparent that there could be many different ways of implementing aspects of the exemplary embodiments in computer programming, and these aspects should not be construed as limited to one set of computer instructions. Further, a skilled programmer would be able to write such computer programs to implement exemplary embodiments based on the flow charts and associated description in the application text. Therefore, disclosure of a particular set of program code instructions is not considered necessary for an adequate understanding of how to make and use the exemplary embodiments. Further, those skilled in the art will appreciate that one or more acts described herein may be performed by hardware, software, or a combination thereof, as may be embodied in one or more computing systems.

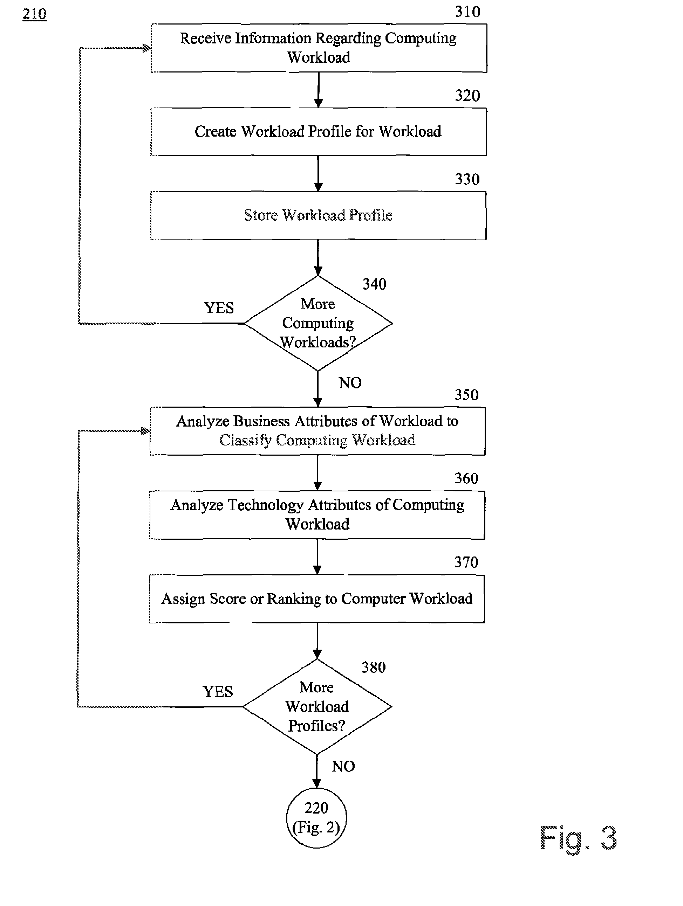

Figure 2 shows a flow diagram of a method 200 for moving one or more computing workloads to a public cloud environment, in accordance with certain exemplary embodiments. Referring to Figures 1 and 2, in step 210, workloads for an organization or other entity are identified and analyzed to determine the suitability of the workloads for being moved to a public cloud environment. The web server 107 can receive information regarding the workloads and create a workload profile for each workload including the received information. This information for a workload can include business attributes and technology attributes of that workload, or any other information regarding the workload. The workload profiles can be stored in a data storage unit, such as the workload database 111. The analytics server 115 can access the stored workload profiles and analyze the business attributes of the workloads and classify each workload into specific categories (e.g., enterprise-class or commodity-class) based on the business and technology attribute analysis. For example, a computing workload may be classified as an enterprise-class workload or a commodity-class workload based on the workload's business attributes. The analytics server 115 can also analyze the technology attributes of each workload and assign a score or ranking to each workload based on the suitability of that workload for being moved to a public cloud environment. This score or ranking can be based on the classification and on the technology attributes of the workload. Step 210 is described in further detail in connection with Figure 3.

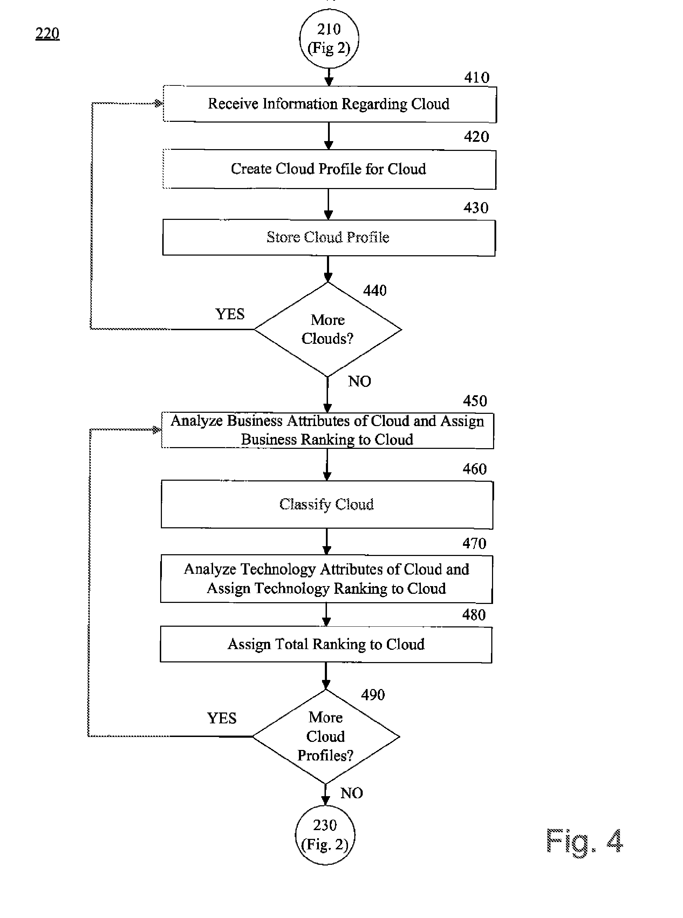

In step 220, one or more public clouds 151 are identified and analyzed to determine the suitability of the public cloud 151 to host a workload. The web server 107 can receive information regarding the public cloud(s) and create a workload profile for each public cloud 151 including the received information. The information for a public cloud can include business attributes and technology attributes of the public cloud 151, or any other information regarding the public cloud 151. The cloud profiles can be stored in a data storage unit, such as the cloud database 113. The analytics server 115 can access the stored cloud profiles and analyze the business attributes of each public cloud 151. Based on this analysis of the cloud's business attributes, the analytics server 115 can assign the public cloud 151 a cloud provider business score or ranking. This business attribute based score or ranking is referred to hereinafter as a Cloud Provider Ranking, or CPR_{Business}. The analytics server 115 can also analyze the technology attributes of the public cloud 151 and assign the public cloud 151 a cloud provider technology score or ranking based on this analysis. This technology attribute based score or ranking is referred to hereinafter as CPR_{Technology}. The analytics server 115 can also assign the public cloud 151 an overall or total score or ranking based on the CPR_{Business} and the CPR_{Technology} assigned to the public cloud 151. This overall ranking is referred to hereinafter as CPR_{Cloud}. The cloud analysis can be based on a particular workload, a category of workloads (e.g., healthcare or financial), or irrespective of workloads. Step 220 is described in further detail in connection with Figure 4.

In step 230, the analytics server 115 determines the 'best-fit' public cloud 151 for each computing workload that is determined to be suitable for moving to a public cloud 151 in step 210. The analytics server 115 can use the CPR_{Cloud} for each public cloud 151 and the Cloud Compatibility Ranking ("CCR") for each workload to determine the best-fit public cloud 151 for each workload. For example, in embodiments where the CPR_{Cloud} is based on a particular workload, then the public cloud 151 having the best CPR_{Cloud} (e.g., highest ranking among the public clouds or highest score) for that workload may be chosen as the best-fit cloud. In another example, where the CPR_{Cloud} is based on a particular workload category (e.g., healthcare or financial), the best-fit public cloud for workload may be the public cloud 151 having the best CPR_{Cloud} for the category for that workload.

In step 240, one or more workloads are identified for moving to a public cloud environment. In certain exemplary embodiments, each workload that has a best-fit public cloud 151 assigned thereto in step 230 may be transferred to the respective best-fit cloud 151. Alternatively, in embodiments where the CPR_{Cloud} is based on a particular workload or a workload category, only those workloads that have a corresponding public cloud 151 with a CPR_{Cloud} may be transferred to a public cloud 151. For example, if the best-fit public cloud 151 for a particular workload has a low CPR_{Cloud} that fails to meet a threshold (e.g., set by a user 131 or by the analytics server 115), that workload may not be transferred to a public cloud 151. Alternatively, or in addition, the analytics server 115 issues a report 119 that identifies the best-fit public cloud 151 (and optionally the CPR_{Cloud}) for workloads determined to be suitable for moving to a public cloud environment. A user 131 can then use the report 119 to determine how to allocate the workloads to the public clouds 151.

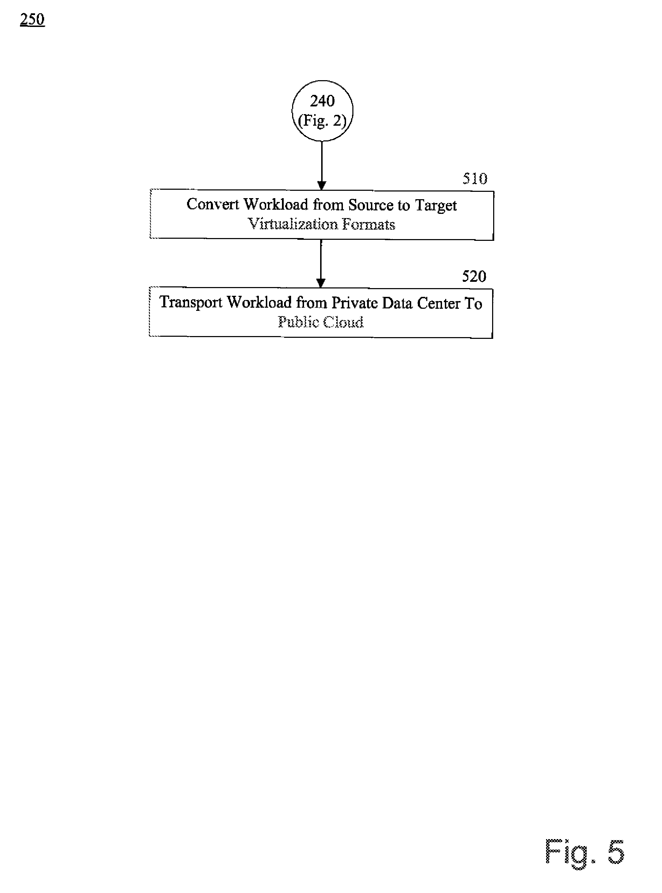

In step 250, one or more workloads are transferred from a private data center to a public cloud 151. If appropriate, each workload is converted from that workload's source virtualization format to the virtualization format of the target public cloud 151 prior to being transferred to the public cloud 151. In certain exemplary embodiments, the analytics server 115 interacts with a private data center (not shown) hosting the workloads to transfer the workloads to the public clouds 151. In certain alternative embodiments, a user 131 may initiate the transfer of the workloads. Step 250 is discussed in more detail below in connection with Figure 5.

Figure 3 shows a flow diagram of a method 210 for identifying and analyzing workloads, in accordance with certain exemplary embodiments, as referenced in Figure 2. Referring to Figures 1 and 3, in step 310, the web server 107 receives information regarding a workload. As discussed above, this information can include any information regarding a workload, including business attributes and technology attributes. Exemplary business attributes for a computing workload include, but are not limited to, type of industry, compliance (e.g., industry compliance) required, amount of service availability or uptime required, and whether the workload is based on third party software. Additional exemplary business attributes are discussed below in connection with step 350. Exemplary technology attributes for a workload include, but are not limited to, size of workload, amount of storage space required, and required OS. Additional exemplary technology attributes for a workload are discussed below in connection with Step 360. In certain exemplary embodiments, the web server 107 may receive the information regarding a workload via a user interface provided to a user 131 at a client computer 133. In certain exemplary embodiments, the web server 107 may receive the information regarding a workload via a software application (not shown) executed by the web server 107 or another device (not shown).

In step 320, the web server 107 creates a workload profile for the workload. This workload profile can include the information regarding the workload received in step 310. The workload profile can also include a unique workload identifier. In step 330, the web server 107 stores the created workload profile in the workload database 111. In addition, although not shown in Figure 3, workload profiles can be updated at any time to reflect changes in that workload. This update may be automatic in response to a change in the workload.

In step 340, the web server 107 conducts an inquiry to determine whether there are any additional workloads for creating a workload profile. In certain exemplary embodiments, a user 131 may indicate via a user interface provided at a client computer 133 that the user 131 wants to create a workload profile. For example, the web server 107 may provide a form or document that allows the user 131 to create a workload profile by entering workload information. This form or document may include a button or icon which may be clicked, touched, or otherwise actuated to create a new workload profile. In certain exemplary embodiments, a software application may iteratively create workload profiles for a set of workloads stored in a particular data store or identified to the application.

If the web server 107 determines that there is another workload to create a workload profile for, the "YES" branch is followed to step 310, where information regarding the workload is received by the web server 107. Otherwise, the "NO" branch is followed to step 350.

In steps 350 and 360, the analytics server 115 accesses a workload profile stored in the workload database and analyzes the attributes of the workload to determine how suitable the workload is for moving to a public cloud environment. In certain exemplary embodiments, this analysis may include determining whether the workload includes one or more attributes or meets one or more criteria to host in cloud environment. The analysis is done on the basis for business and technology attributes of the workload.

The output of this analysis may be a score or ranking that indicates how suitable the workload is for moving to a public cloud environment. This score or ranking comprises the CCR for the workload. In alternative embodiments, the output of the analysis may be an ordered list of the workload profiles stored in the workload database 111.

The attributes considered in the analysis may be user selected or determined or populated by the analytics server 115. In addition, each attribute considered in the analysis may be assigned a weight relative to the respective attribute's importance in the CCR. These weights may be assigned by the analytics server 115 or by a user 131.

Generally, some exemplary workloads that are more suitable for moving to a public cloud environment are (a) workloads that require extreme elasticity (e.g., three servers one day, 1,000 servers the next day, and two servers the next day), (b) test and pre-production systems, (c) mature and contextual applications, such as e-mail and collaboration applications that are not considered part of an organization's core technology focus, (d) software development environments, (e) batch processing jobs with limited security requirements, (f) isolated workloads where latency between components is not an issue, (g) storage solutions or storage as a service, (h) backup solutions or backup and restore as a service, and (i) data intensive workloads if the provider has accompanying storage as a service. On of ordinary skill in the art would appreciate that the aforementioned identified workloads does not constitute an exhaustive list of workloads that are suitable for moving to a public cloud environment but are presented only to provide an example of workloads that are more suitable to move to a public cloud environment.

In step 350, the analytics server 115 analyzes the business attributes of the accessed workload profile and classifies the workload based on this analysis. In certain exemplary embodiments, the analytics server 115 classifies the workload as either a commodity-class (non-business critical - NBC) workload or an enterprise-class (business critical - BC) workload based on the business attributes. Commodity-class workloads may generally include workloads that are more suitable for moving to a public cloud environment, while enterprise-class workloads include those that are less suitable for moving to a public cloud environment.

As discussed above, some exemplary business attributes of a workload include, but are not limited to, type of industry, compliance (e.g., industry compliance) required, amount of service availability or uptime required, and whether the workload is based on third party software. Some exemplary business attributes that may qualify a workload as an enterprise-class workload include (a) workloads composed of multiple, co-dependent services, and online transaction processing (e.g., OLTP applications, real-time transaction processing applications, online net-banking applications, airline travel ticket booking applications, power grid management applications, and public transport management applications, (b) health care applications with patient, personal, and medical information (e.g., medical insurance, patient and hospital management systems), (c) workloads requiring a high level of regulatory compliance or accountability (e.g., workloads subject to Sarbanes-Oxley Federal Government Systems, such as stock exchange applications), (d) other workloads, such as national defense systems and nuclear and biochemical laboratory management applications, and (e) applications that require a precise or substantial availability or uptime (e.g., 99.99% uptime or more). The analytics server 115 may classify these aforementioned workloads and workloads having similar business attributes as enterprise-class workloads. Some additional business attributes that may be used by the analytics server 115 to classify a workload as enterprise-class include, but are not limited to, (a) workloads based on third party software that does not have a virtualization or cloud aware licensing strategy, (b) workloads that require detailed chargeback or utilization measures are required for capacity planning or departmental billing, (c) workloads that require significant customization and are not written specifically to execute in a web-based environment, and (d) workloads that depend on sensitive data normally restricted and available behind network firewalls of the organization due to security requirements (e.g., employee information or financial information).

The analytics server 115 may be configurable such that a user 131 (e.g., business analyst 131-1) may specify business attributes that can be used to classify a workload as enterprise-class or commodity-class. For example, a user 131 may specify that workloads requiring an uptime of 99.9% or greater should be classified as enterprise-class workloads while workloads that require less uptime should be classified as commodity-class workloads. In another example, a user 131 may specify that applications requiring certain certifications (e.g., Sarbanes-Oxley, SAS 70 Type II, FDIC, etc.) are classified as enterprise-class. In yet another example, a user 131 may specify that OLTP applications are classified as enterprise-class.

In certain exemplary embodiments, the user 131 may also specify the weights for each business attribute considered in this analysis. For example, the user 131 may assign a high weight to an industry certification, while assigning a lower weight to uptime. The analytics server 115 may then determine the classification of the workload based on the attributes that the workload includes (or does not include) and their corresponding weights. Thus, the analysis of a workload's business attributes can be based on a single or multiple business attribute(s).

In certain exemplary embodiments, rather than the analytics server 115 assigning a classification to the workload based on business attributes of the workload, a user 131 may specify the classification. For example, a business analyst 131-1 may decide that a particular workload should not be moved to a public cloud environment based on business attributes or other criteria or reasons. In this example, the business analyst 131-1 may classify the workload as an enterprise-class workload.

Table 1 below provides an example of five workloads BA1 - BA5 classified as either commodity-class (C) or enterprise-class (E) based on their respective business attributes, as determined by the analytics server 115. In this example, the analytics server 115 considers the following business attributes of the workloads: (a) availability, (b) whether the workload is an OLTP type, and (c) whether the application is a medical application. As shown in Table 1, workloads BA1 and BA3-BA5 are classified as enterprise-class workloads, while workload BA2 is classified as a commodity-class workload.

**Table 1. Workload Classification**

| Workload | Availability (%) | OLTP | Medical Application? | Commodity or Enterprise |
|---|---|---|---|---|
| BA1 | 99.9 | No | Yes | E |
| BA2 | 99.0 | No | No | C |
| BA3 | 99.999 | Yes | Yes | E |
| BA4 | 99.9 | No | Yes | E |
| BA5 | 95 | No | Yes | E |

In step 360, the analytics server 115 analyzes the technology attributes of the accessed workload profile to compute or otherwise determine a CCR for the workload based on the analysis. Although step 360 is illustrated as being performed directly after step 350, in certain exemplary embodiments, only workloads having a certain classification (e.g., commodity-class) may be analyzed in step 360. Thus, step 350 can filter out the enterprise-class workloads from further analysis on the basis of technology attributes. For example, if an organization decides not to move any enterprise-class workloads to a public-cloud environment, a technology analysis may not be appropriate for the enterprise-class workloads.

The analytics server 115 can consider various technology attributes in the technology analysis, including, but not limited to, (a) size of workload (e.g., in GBs), (b) size of data storage space required by the workload (e.g., in GBs), (c) rate at which a backend database changes with each transaction using current business application architecture and business logic, (d) whether conversion is required (e.g., from physical to virtual (P2V) or virtual to virtual (V2V)), (e) required OS, (f) supported DBMS, (g) frequency of access to storage system, (h) level of data encryption required, (i) tolerance to individual system/component or entire site failure, (j) dependency on unique hardware and peripherals (external dependency), (k) application licensing, (1) ease of installation and configuration in a public cloud environment, (m) technical support or expertise required to manage application, (n) frequency of patching and updating application, and (o) volume of data to be synchronized between private data center (source) and public cloud environment (target) while moving the workload.

The analytics server 115 can consider one or more of the aforementioned technology attributes in the analysis, as well as any other technology attributes of a workload known to one of ordinary skill in the art having the benefit of the present disclosure. In addition, each of the technology attributes considered may include a weight corresponding to that attribute's relative importance. These weights may be user configurable (e.g., by the IT infrastructure specialist 131-2) or may be assigned by the analytics server 115.

In step 370, the analytics server 115 assigns the workload a CCR based at least on the analysis of the technology attributes in step 360. For example, the CCR for a workload may be a numerical score, such as between one and five. In such an example, a score of one may indicate high suitability for the workload to be moved to a public cloud environment (and thus, indicate that it would be easy to move the workload to a cloud environment), while a score of five may indicate high suitability for the workload to be retained in the private data center (and thus, indicate that it would be difficult to move the workload to a cloud environment).

In certain exemplary embodiments, the CCR for a workload may be based on the number of technology attributes considered in the technology analysis that the workload includes. For example, the technology analysis may assign the CCR based on how many out of five technology attributes the workload includes. This score may be between one and five, corresponding to the number of considered technology attributes that workload includes. In addition or alternatively, each of the five considered technology attributes may be assigned a weight, for example having a value of either one or two. If the workload includes the higher weighted technology attributes, then the CCR for the workload may be higher.

In step 380, the analytics server 115 conducts an inquiry to determine whether there are any additional workload profiles to analyze. If the analytics server 115 determines that there are additional workload profiles to analyze, the "YES" branch is followed to step 350, where another workload profile is analyzed. Otherwise, the "NO" branch is followed to step 220, as referenced in Figure 2.

Table 2 below provides an example of five workloads analyzed by the analytics server 115 based on three technical criteria. In this example, the analytics server 115 considers the following technology attributes of the workloads: (a) whether the workload is in a virtual machine or a physical machine format, (b) if the workload is in physical machine format, then whether the workload can be converted into virtual format, and (c) whether the workload has any hardware dependency to execute business logic. As shown in Table 2, the analytics server 115 assigned a CCR of 1 to BA1, a CCR of 2 to BA2, a CCR of 3 to BA3, a CCR of 2 to BA4, and a CCR of 3 to BA5. In this example, a CCR of 1 indicates high suitability for moving the workload to a public cloud environment while higher CCRs (e.g., > 3) indicate decreasing suitability for moving the workload to a cloud environment. For example, BA1 does not have any hardware dependency and is already in a virtual machine format, making BA1 highly suitable for moving to a public cloud environment as it does not require much ground work to host it in the cloud environment. However, BA5 is in physical machine format, and has a hardware dependency which affects the CCR of BA5 to 3. Because it has higher CCR, it is not suitable to be moved to cloud environment as it requires physical to virtual format conversion, and further configuration to remove the hardware dependency to execute business logic in cloud environment.

**Table 2. CCRs for Workloads**

| Workload | VM/PM Hosted | Can be Virtualized? | H/W Dependency? | CCR |
|---|---|---|---|---|
| BA1 | VM | - | No | 1 |
| BA2 | PM | Yes | No | 2 |
| BA3 | PM | No | No | 3 |
| BA4 | VM | - | Yes | 2 |
| BA5 | PM | Yes | Yes | 3 |

The workload with the best CCR (e.g., lowest in the example shown in Table 2) is typically most preferred to move to a public cloud environment. As the rankings move from best to worst, the complexity and risk of moving the workload increases. The CCR for the workloads can aid organizations in identifying the most suitable workloads that can be moved to a public cloud environment without or with little technology or business architecture re-factoring.

Figure 4 shows a flow diagram of a method 220 for identifying and analyzing public clouds 151 in accordance with certain exemplary embodiments. Referring to Figures 1 and 4, in step 410, the web server 109 receives information regarding a public cloud 151. As discussed above, these attributes can include any information regarding a public cloud 151, including business attributes and technology attributes. Exemplary technology features of a cloud 151 may include, but are not limited to, whether the cloud 151 provides only virtual machines or virtual resources to host computing workloads, supported OS, supported DBMS, and application development environments provided by the cloud 151. Exemplary technology features for a cloud 151 may also include underlying server, storage, network, and load balancer hardware; dynamic scale-in, scale-out, scale-up, and scale-down capabilities; and Data in Motion ("DIM") and Data at Rest ("DAR") for multi-tenant shared environments. Additional cloud capabilities that may be identified in a cloud profile include, but are not limited to, resource demand forecasting for business applications, dynamic business service discovery, end to end business service transaction monitoring, alerting, event logging, auto-incident generation, and self service console, to name a few. In certain exemplary embodiments, the information regarding a public cloud 151 also includes pricing information.

In certain exemplary embodiments, the web server 109 may receive the information regarding a public cloud 151 via a user interface provided to a user 131 at a client computer 133. In certain exemplary embodiments, the web server 109 may receive the information regarding a public cloud 151 via a software application (not shown) executed by the web server 109 or another device (not shown).

In step 420, the web server 109 creates a cloud profile for the public cloud 151. This cloud profile can include a PCID and the information regarding the public cloud 151 received in step 410. In step 430, the web server 109 stores the created could profile in the cloud database 113. In certain exemplary embodiments, rather than a user entering cloud profile information or a software application obtaining information regarding a public cloud and the web server 109 creating a cloud profile, a cloud provider may supply the cloud profile to the web server 109. In addition, although not shown in Figure 4, cloud profiles can be updated at any time to reflect changes in the public cloud 151 attributes. For example, if the provider of the public cloud 151 achieves a certification, the cloud profile may be updated.

In step 440, the web server 109 conducts an inquiry to determine whether there are any additional public clouds for creating a cloud profile. In certain exemplary embodiments, a user 131 may indicate via a user interface provided at a client computer 133 that the user 131 wants to create a cloud profile for a public cloud 151. For example, the web server 109 may provide a form or document that allows the user 131 to create a cloud profile by entering cloud information. This form or document may include a button or icon to create a new cloud profile.

If the web server 109 determines that there is another public cloud 151 to create a cloud profile for, the "YES" branch is followed to step 410, where information regarding the public cloud 151 is received by the web server 109. Otherwise, the "NO" branch is followed to step 450.

In steps 450-470, the analytics server 115 analyzes the business and technical attributes of a public cloud 151 to determine how suitable the public cloud 151 is for hosting a specific type of business workload and to classify the public cloud 151. This analysis may be based on a particular workload, a category of workloads, or a general analysis irrespective of a workload or category. In certain exemplary embodiments, this analysis may include determining whether the public cloud 151 includes one or more attributes or meets one or more criteria to host specific industry workload. For example, this analysis may include determining whether the public cloud 151 includes one or more business attributes and/or one or more technology attributes.

The attributes considered in the analysis may be selected based on the requirements of a particular workload or category of workloads. For example, a particular financial workload may require certain certifications and one certification may be more desirable than another certification. In this example, the analysis may consider both certifications, while assigning a higher CPR_{Cloud} to public clouds 151 having the more desirable certification than those clouds 151 having the less desirable certification.

The attributes used in the analysis may be user selected or determined by the analytics server 115. In addition, each attribute considered in the analysis may be assigned a weight relative to the respective attribute's importance in the CPR_{Cloud}. These weights may be assigned by the analytics server 115 or by a user 131. In certain exemplary embodiments, the analytics server 115 may be operable to select the attributes and/or their weights based on a particular workload or based on a workload category.

In step 450, the analytics server 115 analyzes the business attributes of the public cloud 151 and assigns the public cloud 151 a CPR_{Business} based on this analysis. The analysis of a public cloud's business attributes may be based on one or multiple business attributes. For example, this analysis may be based on whether the cloud provider has achieved SAS 70 Type 1, SAS 70 Type II, and/or ISO/IEC 27001 certification(s). Table 3 below provides an example of five public clouds PC1-PC5 having an assigned CPR_{Business} based on these certification. As shown in Table 3, the public cloud PC2 has a CPR_{Business} of "1" which is the highest rank for this exemplary analysis resulting from public cloud PC2 meeting all three criteria. Likewise, public cloud PC5 has a CPR_{Business} of "5" which is the lowest rank for this exemplary analysis for failing to meet any of the three criteria.

**Table 3. Public Cloud Ranking - Business**

| Cloud Provider | SAS 70 Type I | SAS 70 Type 2 | ISO/IEC 27001 | CPR_{Business} |
|---|---|---|---|---|
| PC1 | Yes | No | No | 4 |
| PC2 | Yes | Yes | Yes | 1 |
| PC3 | Yes | Yes | No | 2 |
| PC4 | Yes | No | Yes | 3 |
| PC5 | No | No | No | 5 |

Each of the business attributes considered by the analytics server 115 can include a weight based on that attribute's relative importance. This weight can be selected by a user 131 or assigned by the analytics server 115. For example, in an analysis of public clouds 151 for a health service category or health service workloads, a Health Insurance and Portability Act (HIPPA) certification attribute may be assigned a higher weight than an SAS 70 Type I or Type II certification attribute. Thus, a public cloud 151 having the HIPPA certification may be assigned a higher CPR_{Business} for hosting the healthcare category business workloads than a public cloud 151 having SAS Type I and SAS Type II certifications but without HIPAA certification.

In addition to industry specific or category specific attributes discussed above, other business related attributed may be used in the business attribute analysis. Some additional business attributes that may or may not be category specific include, but are not limited to, (a) IT infrastructure availability, (b) disaster recovery capability, (c) service level agreement (SLA), and (d) business service level objectives (SLO). In addition, the business attribute analysis may consider (a) the level of technical support provided by the cloud provider, (b) clearly defined functional as well as the hierarchical escalation matrix, (c) physical security of the hosted servers and data centers, (d) price models, (e) terms of exit from the contract, (f) efforts of moving to public cloud environment, (g) use of existing software license, (h) IT support framework, such as IT Infrastructure Library (ITIL), and (i) data center certification level (e.g., Tier 1 to Tier IV). The business attribute analysis may also consider attributes related to the provider of the public cloud 151, such as (a) availability of a business partner of the cloud provider, (b) past experiences with the cloud provider, (c) number of existing clients of the cloud provider, (d) total number of successful migrations to the cloud environment, and (e) number of existing clients.

In step 460, one of the public clouds 151 having a cloud profile stored in the cloud database 113 is classified. In certain exemplary embodiments, the analytics server 115 accesses a cloud profile and classifies the public cloud 151 corresponding to the cloud profile. In alternative embodiments, a user 131 may enter a classification for the public cloud 151 as part of the cloud profile creation process discussed in connection with steps 410-420.

The public cloud 151 may be classified into one or more of various categories including, but not limited to, financial cloud, educational cloud, social network cloud, marketing cloud, and sales and distribution cloud, on the basis for specific industry compliance or certification it has achieved. Many other categories are also feasible as one of ordinary skill in the art having the benefit of the present disclosure would appreciate. The classification of the public cloud 151 into a category can be based on various criteria. For example, classification as a financial cloud may be based on whether the provider of the public cloud 151 has achieved the Statement on Auditing Standards (SAS) 70 Type I or Type II audit reports and/or a Data Protection and Information Security (ISO 27001) certification. In another example, classification as a financial cloud may be based on whether the provider of the public cloud 151 has achieved statements from the Federal Financial Deposit Insurance Corporation (FDIC), the Federal Financial Institutions Examination Council (FFIEC), the Office of the Comptroller of the Currency (OCC), and/or the National Institute of Standards and Technology (NIST). Thus, a public cloud 151 may be classified into a category based upon certifications and audits achieved by the cloud provider to host business applications and store data related to specific industry.

This classification of the public cloud 151 helps to quickly eliminate other non-compliant public clouds 151 for specific types of workloads. For example, a public cloud 151 classified as a social networking cloud environment may be eliminated to be considered to host healthcare related business services and to store required data..

The analytics server 115 can analyze the cloud profile for each public cloud 151 and each attribute of the public cloud 151 to classify the public cloud 151 into one or more categories. If there is a change in a cloud profile of a public cloud 151, the cloud profile may be re-analyzed to reclassify that public cloud 151.

In step 470, the analytics server 115 analyzes the technology attributes of the accessed cloud profile to compute or otherwise determine a CPR_{Technology} for the public cloud 151 corresponding to the cloud profile based on the analysis. The analytics server 115 can consider various technology attributes in this technology analysis, including, but not limited to, whether the cloud 151 provides only virtual machines or virtual resources to host computing workloads, supported OS, supported DBMS and application development environments provided by the public cloud 151. The technology analysis may also consider underlying server, storage, network, and load balancer hardware; dynamic scale-in, scale-out, scale-up, and scale-down capabilities; and whether the public cloud 151 offers data DIM and/or DAR for multi-tenant shared environments. The technology analysis may also consider whether the public cloud 151 offers one or more of (a) resource demand forecasting for business applications, (b) dynamic business service directory, (c) end to end business service transaction monitoring, (d) alerting, (e) event logging, (f) auto-incident generation, and (g) self service console.

The analytics server 115 can consider one or more of the aforementioned technology attributes in the technology analysis of the public cloud 151, as well as any other technology attributes of a public cloud 151 that may be known to one of ordinary skill in the art having the benefit of the present disclosure. In addition, each of the technology attributed considered by the analytics server 115 may include a weight corresponding to that attribute's relative importance in the public cloud analysis. The weights may be user configurable (e.g., by the IT infrastructure specialist 131-2) or may be assigned by the analytics server 115.

The analytics server 115 assigns the public cloud 151 a CPR_{Technology} based on the analysis of the public cloud's technology attributes included in the cloud profile for the public cloud 151. The CPR_{Technology} represents how suitable the public cloud's technology is for hosting a specific type of workload. The CPR_{Technology} may be a numerical score, such as between one and five. In such an example, a score of one may indicate higher suitability of a public cloud 151 for hosting a workload, while a score of five may indicate lower suitability for the public cloud 151 to host a workload. The CPR_{Technology} may be based on the number of considered technology attributes that the public cloud includes and the weights of those attributes.

The technology attributes used in the public cloud's technology analysis can be selected based on the workloads for an organization. For example, if the workloads under consideration for moving to a public cloud environment require physical servers, then this attribute may be considered in the technology analysis of the public clouds 151. Similarly, a weight for a technology attribute may be assigned based on the workloads under consideration. In addition or in the alternative, certain technology attributes may be included in the technology analysis of the public clouds 151 regardless of type of the workloads under consideration.

Table 4 below provides an example of three public clouds PA1 - PA3 analyzed by the analytics server 115 based on their respective technology attributes. In this example, the analytics server 115 considers the following technology attributes of the public clouds 151: (a) whether the public cloud 151 provides physical servers, (b) whether the public cloud 151 provides virtual servers, (c) what virtual machine format the public cloud uses, and (d) whether the public cloud 151 supports DIM. As shown in Table 4, the analytics server 151 assigned a CPR_{Technology} of 3 to PA1, a CPR_{Technology} of 1 to PA2, and a CPR_{Technology} of 3 to PA3. In this example a CPR_{Technology} of 1 indicates high suitability for a public cloud 151 for hosting a workload, while a higher CPR_{Technology} indicates less suitability for a public cloud 151 to host a workload. For example public cloud PA2 provides both physical and virtual servers and also supports DIM. Thus, public cloud PA2 is preferred for a business workload which is requires physical servers for hosting and need DIM (data security in transit/motion) over public cloud PA1 which does not provide physical servers and does not support DIM.

**Table 4. CPR_{Technology} for Public Clouds**

| Public Cloud | Provide Physical Servers? | Provide Virtual Servers? | Virtual Machine Format | Supports DIM? | CPR_{Technology} |
|---|---|---|---|---|---|
| PA1 | No | Yes | Xen | No | 3 |
| PA2 | Yes | Yes | VMware | Yes | 1 |
| PA3 | Yes | Yes | Xen | No | 3 |

In step 480, the analytics server 115 assigns the public cloud 151 a total score or ranking CPR_{Cloud} based on the CPR_{Business} and the CPR_{Technology} assigned to the public cloud 151 in steps 460-470. In certain exemplary embodiments, the analytics server 115 may add, average, or otherwise combine the CPR_{Business} and the CPR_{Technology} for the public cloud 151 to determine the CPR_{Cloud} for the public cloud 151. In certain exemplary embodiments, the analytics server 115 may assign a higher weight to either the CPR_{Business} or the CPR_{Technology} when determining the CPR_{Cloud} for the public cloud 151.

In step 490, the analytics server 115 conducts an inquiry to determine whether there are any additional cloud profiles to analyze. If the analytics server 115 determines that there are additional cloud profiles to analyze, the "YES" branch is followed to step 450, where another cloud profile is analyzed. Otherwise, the "NO" branch is followed to step 230, as referenced in Figure 2.

Figure 5 shows a flow diagram of a method 230 for moving a computing workload to a public cloud 151, in accordance with certain exemplary embodiments. Referring to Figures 1 and 5, in step 510, the web server 109 (or another server or device) converts a workload from a source virtualization format to a target virtualization format for a public cloud 151. In step 520, the web server 109 (or another server or device) transports the converted workload from a private data center to the public cloud 151.

The exemplary methods and acts described in the embodiments presented previously are illustrative, and, in alternative embodiments, certain acts can be performed in a different order, in parallel with one another, omitted entirely, and/or combined between different exemplary embodiments, and/or certain additional acts can be performed, without departing from the scope and spirit of the invention. Accordingly, such alternative embodiments are included in the inventions described herein.

The exemplary embodiments can be used with computer hardware and software that performs the methods and processing functions described above. As will be appreciated by those skilled in the art, the systems, methods, and procedures described herein can be embodied in a programmable computer, computer-executable software, or digital circuitry. The software can be stored on computer-readable media. For example, computer-readable media can include a floppy disk, RAM, ROM, hard disk, removable media, flash memory, memory stick, optical media, magneto-optical media, CD-ROM, etc. Digital circuitry can include integrated circuits, gate arrays, building block logic, field programmable gate arrays (FPGA), etc.

Although specific embodiments have been described above in detail, the description is merely for purposes of illustration. It should be appreciated, therefore, that many aspects described above are not intended as required or essential elements unless explicitly stated otherwise. Various modifications of, and equivalent acts corresponding to, the disclosed aspects of the exemplary embodiments, in addition to those described above, can be made by a person of ordinary skill in the art, having the benefit of the present disclosure, without departing from the spirit and scope of the invention defined in the following claims, the scope of which is to be accorded the broadest interpretation so as to encompass such modifications and equivalent structures.

## Claims

1. A computer-implemented method for identifying at least one of a plurality of computing workloads for hosting by a cloud computing environment, comprising:
analyzing, by a computing device, at least one first attribute of each computing workload to determine whether the computing workload is suitable for being hosted in a cloud computing environment;
in response to a detemination that at least one of the computing workloads is suitable for being hosted in a cloud computing environment, analyzing, by a computing device, at least one second attribute of each of the at least one computing workloads to determine a cloud computing score for each of the at least one computing workloads, the cloud computing score being indicative of the suitability of the respective computing workload to be hosted in a cloud computing environment;
analyzing, by a computing device, one or more public clouds to determine a cloud provider score for each of the one or more public clouds, the cloud provider score being indicative of the suitability of the respective public cloud for hosting a computing workload; and
assigning one of the at least one computing workloads to one of the public clouds based one the cloud computing score for the one computing workload and the cloud provider score for the one public cloud.

2. The computer-implemented method of claim 1, wherein the at least one first attribute comprises a business attribute.

3. The computer-implemented method of claim 2, wherein the business attribute comprises at least one of an industry of the computing workload, a compliance required by the computing workload, and an amount of availability required by the computing workload.

4. The computer-implemented method of claim 2, wherein the business attribute comprises at least one of a classification of the computing workload as an enterprise-class or a commodity-class workload, an industry of the computing workload, a compliance required by the computing workload, and an amount of availability required by the computing workload.

5. The computer-implemented method of any preceding claim, wherein the at least one second attribute comprises a technology attribute.

6. The computer-implemented method of claim 5, wherein the technology attribute comprises at least one of a size of the computing workload, an amount of data storage required by the computing workload, and an operating system requirement of the workload.

7. The computer-implemented method of any preceding claim, wherein the step of analyzing one or more public clouds to determine a cloud provider score for each of the one or more public clouds comprises analyzing at least one of a technology attribute of each public cloud and a business attribute of each public cloud.

8. The computer-implemented method of any one of claims 1 to 6, wherein the step of analyzing one or more public clouds to determine a cloud provider score for each of the one or more public clouds comprises:
assigning each public cloud a business score based on at least one business attribute of the public cloud; and
assigning each public cloud a technology score based on at least one technology attribute of the public cloud,
wherein the cloud provider score for each public cloud comprises a combination of the business score and the technology scores for the respective public cloud.
